(19) Europäisches Patentamt
European Patent Office
Office européen des brevets

(11) Veröffentlichungsnummer : **0 339 226 B1**

(12) **EUROPÄISCHE PATENTSCHRIFT**

(45) Veröffentlichungstag der Patentschrift :
06.03.91 Patentblatt 91/10

(21) Anmeldenummer : 89104387.9

(22) Anmeldetag : 13.03.89

(51) Int. Cl.⁵ : **A01D 34/70**

(54) Sammel- oder Fangvorrichtung mit Füllstandsanzeige für ein Garten-, Rasen- oder Landschaftspflegegerät.

(30) Priorität : 27.04.88 DE 3814119

(43) Veröffentlichungstag der Anmeldung :
02.11.89 Patentblatt 89/44

(45) Bekanntmachung des Hinweises auf die
Patenterteilung :
06.03.91 Patentblatt 91/10

(84) Benannte Vertragsstaaten :
AT DE FR GB IT

(56) Entgegenhaltungen :
EP-A- 0 253 231
WO-A-84/03413
FR-A- 2 237 564
FR-A- 2 571 587
GB-A- 1 242 515

(56) Entgegenhaltungen :
GB-A- 2 101 864
NL-A- 7 000 806
US-A- 3 606 747
US-A- 3 971 198
US-A- 4 761 943

(73) Patentinhaber : SABO-MASCHINENFABRIK
AKTIENGESELLSCHAFT
Auf dem Höchsten 22
W-5270 Gummersbach 31, Dieringhausen (DE)

(72) Erfinder : Ostermeier, Heinrich, Dipl.-Ing.
Tagetesweg 31
W-5000 Köln 90 (DE)

(74) Vertreter : Harwardt, Günther, Dipl.-Ing.
HARWARDT NEUMANN PATENTANWÄLTE
Scheerengasse 2 Postfach 1455
W-5200 Siegburg 2 (DE)

## Beschreibung

Die Erfindung betrifft eine Sammel- oder Fangvorrichtung für ein Garten-, Rasen- oder Landschaftspflegegerät mit einer Füllstandsanzeige, wobei das zu sammelnde oder aufzufangende Gut durch Ausnutzung eines vom Gerät erzeugten Luftstromes durch die Auswurföffnung in den zumindest teilweise luftdurchlässige Sammel- oder Fangeinrichtung überführt wird und als Füllstandsanzeiger ein durch die Auftriebskraft des die Sammel- oder Fangvorrichtung durchströmenden Luftstromes aus der Ruhelage abgelenktes Anzeigeelement vorhanden ist.

Aus der GB-A-1 242 515 ist eine Sammel- und Fangeinrichtung bekannt, die im rückwärtigen Bereich ein vom Sammelraum getrenntes Abteil vorsieht, das durch ein luftdurchlässiges Gitter abgetrennt ist. Ein Anzeigeelement ist als Klappe ausgebildet, welche einseitig schwenkbar am Außenteil der Fangeinrichtung angebracht ist und als Füllstandsanzeige durch den erzeugten Luftstrom verwendet wird.

Von Nachteil bei dieser bekannten Ausführung ist das relativ kleinflächige Anzeigeelement, dessen Funktion in erheblichem Maße von dem erzielten Überdruck abhängt und deren Funktion durch Reibung und Verschmutzung beeinträchtigt wird. Die Auslenkung während der normalen Funktion und die Rückstellung in die Ursprungslage ist hierbei von der Schwerkraft abhängig und führt zum Beispiel in einem hügeligen Gelände leicht zu falschen Füllstandsinformationen. Darüber hinaus ist es erforderlich, daß das Anzeigeelement im hinteren Bereich angebracht ist. Eine solche Anbringung verfälscht jedoch das Ergebnis, da der hintere Bereich zuerst gefüllt wird.

Im Zusammenhang mit den obengenannten Geräten ist immer wieder auf das Bedürfnis hingewiesen worden, eine Füllstandsanzeige vorzusehen.

Für den Bediener eines solchen Gerätes ist erst dann, wenn das Gut, das eigentlich aufgenommen werden soll, auf dem Boden liegenbleibt, ein Zeichen gegeben, daß die Fangvorrichtung gefüllt ist und kein weiteres Gut mehr aufnehmen kann. Insbesondere bei Rasenmähern stellt der Bediener häufig erst nach mehreren Metern, die er zurückgelegt hat, fest, daß kein Gras mehr in die Fangvorrichtung überführt wird. Eine Sichtkontrolle ist kaum möglich.

Der Erfindung liegt daher die Aufgabe zugrunde, einen Füllstandsanzeiger für Sammel- oder Fangvorrichtungen in Verbindung mit Garten-, Rasen- oder Landschaftspflegegeräten vorzuschlagen, der einfach im Aufbau ist und ein frühzeitiges Erkennen des gefüllten Zustandes möglich macht.

Diese Aufgabe wird erfindungsgemäß dadurch gelöst, daß das Anzeigeelement flächig ausgebildet und mindestens mit einer Seitenkante an der luftdurchlässigen Außenfläche der Sammel- oder Fangvorrichtung befestigt ist und bei der das Anzeigeelement aus einem Gewebe, das eine geringere Luftdurchlässigkeit als die Wandung der Sammel- oder Fangvorrichtung aufweist oder aus einer Kunststoffolie besteht.

Die Erfindung geht von der Erkenntnis aus, daß solange noch das aufzusammelnde Gut in die Sammel- oder Fangvorrichtung überführt werden kann, auch noch ein Luftstrom vorhanden ist, der die Fangeinrichtung durchströmt und aufgrund deren durchlässigen Ausbildung nach außen tritt. Ist jedoch die Sammel- oder Fangvorrichtung gänzlich gefüllt, so wirkt die Auswurföffnung wie eine Art Ventil, das geschlossen wurde.

Die Luft kann nicht mehr in die Sammel- oder Fangvorrichtung hineinströmen. Die Auslenkung des Anzeigeelementes wird aufgehoben, wodurch erkennbar ist, daß kein weiteres Gut mehr aufgenommen werden kann.

Für den Fall, des normalen Arbeitszustandes, d.h. solange noch Gut in die Sammel- oder Fangvorrichtung überführt werden kann, wird das Anzeigeelement nach Art einer Fahne von der Anlagefläche abgehoben.

In weiterer Ausgestaltung ist vorgesehen, daß das Anzeigeelement mit zwei gegenüberliegenden Seitenkanten an der Außenfläche der Sammel- oder Fangvorrichtung befestigt ist und der Abstand der Befestigungsstellen an der Sammel-oder Fangvorrichtung kleiner ist, als die gestreckte Länge des flächigen Anzeigeelementes, gemessen zwischen den zur Befestigung vorgesehenen Seitenkanten.

Das Anzeigeelement hebt sich wie eine Art Segel vom Untergrund ab.

Es ist jedoch auch möglich, daß das Anzeigeelement zwischen den Befestigungsstellen mit mindestens zwei weiteren Gelenkstellen versehen ist, deren Achsen sich parallel zu den Seitenkanten, die zur Befestigung vorgesehen sind, erstrecken. Hierdurch kann das Maß des Abhebens, das erforderlich ist, um einen normalen Arbeitszustand zu erkennen bzw. um zu erkennen ob die Sammel- oder Fangvorrichtung gefüllt ist, vergrößert werden.

Um das gezielte Überführen des Anzeigeelementes aus der Ruhestellung in eine abgelenkte Stellung und zurück in die Ruhestellung zu verbessern, ist vorgesehen, die Befestigungsstellen und/oder die weiteren Gelenkstellen als Knickkanten oder Filmschanierstellen auszubilden.

Das Anzeigeelement kann in weiterer Ausgestaltung der Erfindung mit der Sammel- oder Fangvorrichtung durch Siegeln, Kleben, Knöpfen, Klammern oder einen Klettverschluß verbunden werden. Es ist also auch eine Nachrüstung ohne weiteres bei bestehenden Altgeräten möglich.

Alternativ kann das Anzeigeelement einer der Seitenflächen, der Deck- oder Hinterfläche der Sammel- oder Fangvorrichtung zugeordnet sein. Bevorzugt erfolgt jedoch die Zuordnung zur Deckfläche.

Ferner ist vorgeschlagen, daß Anzeigeelement möglichst nahe der Auswurfsöffnung des Gerätes anzuordnen.

Ein bevorzugtes Anwendungsgebiet für die Sammel- oder Fangvorrichtung nach der Erfindung sind Sichelrasenmäher, Vertikutierer, Laubsauger oder Laubkehrer mit Auswurföffnung. Da Voraussetzung ist, daß die Sammel- oder Fangvorrichtung luftdurchlässig ist, wird vorgeschlagen, diese in Verbindung mit einem Fangsack aus einem luftdurchlässigen Gewebe oder mit einem gelochten Fangkorb einzusetzen.

Verschiedene Ausführungsbeispiele sind in der Zeichnung schematisch dargestellt.

Es zeigt

Fig.1 einen Rasenmäher in Verbindung mit einem Fangsack,

Fig.2 einen Fangsack mit einer Fahne oder Klappe als Anzeigeelement,

Fig.3 ein beidendig an den Fangsack angeschlossenes Streifenelement als Anzeigeelement,

Fig.4 ein flächiges Anzeigeelement, ähnlich dem gemäß Figur 3, jedoch mit vier weiteren Gelenkstellen zum definierten Ablegen,

Fig.5 ebenfalls ein beidendig befestigtes, flächiges Anzeigeelement mit zwei weiteren Gelenkstellen,

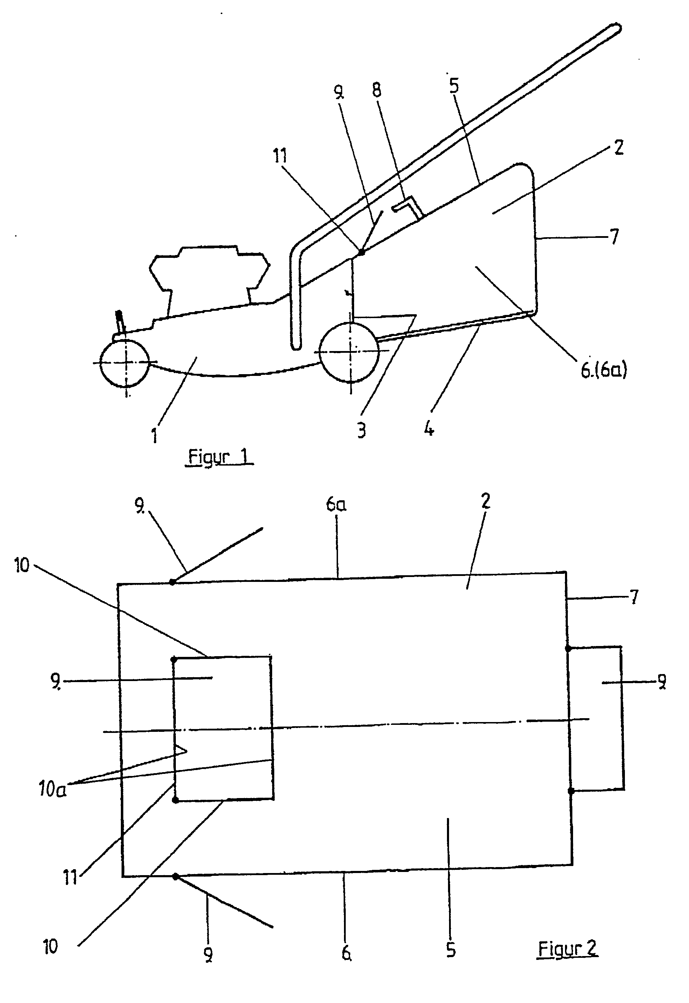

In Figur 1 ist ein Sichelrasenmäher 1 dargestellt, an dessen am Heck befindlichen Auswurföffnung 3 ein Fangsack 2 als Sammel- oder Fangvorrichtung angeschlossen ist. Der Fangsack 2 umfaßt eine feste Bodenplatte 4 und ein Drahtgestell, das von einem Gewebe, das luftdurchlässig ist, umschlossen ist. Die Deckfläche des Fangsackes 2 ist mit 5, die Seitenflächen mit 6, 6a und die Hinterfläche mit 7 bezeichnet. Ferner ist der Fangsack mit einem Tragegriff 8 versehen.

Es ist auch die Anwendung der erfindungsgemäßen Lösung auf eine Sammel- oder Fangvorrichtung möglich, bei der diese als gelochter Fangkorb ausgebildet ist.

In Figur 2 ist das flächige Anzeigeelement 9 in Anordnung an verschiedenen Flächen 5, 6, 6a, 7 des Außenumfanges des Fangsackes 2 dargestellt. Die bevorzugte Anordnung erfolgt im Bereich der Deckfläche 5, wobei jedoch auch eine Anordnung an den Seitenflächen 6, 6a oder der Hinterfläche 7 des Fangsackes 2 denkbar ist. In Figur 2 ist der Fangsack 2 in der Draufsicht dargestellt. Das fahnenartig oder klappenartig ausgebildete Anzeigeelemente 9 weist zwei zur Längsachse des Fangsackes 2 ausgerichtete Seitenkanten 10 und zwei hierzu in der Ebene des Fangsackes 2 liegende, senkrecht angeordnete Seitenkanten 10a auf und ist mit einer Seitenkante 10a durch eine Befestigungsstelle 11 mit der Deckfläche 5 verbunden. Bevorzugt ist diese Seitenkante 10a nahe zur Auswurföffnung 3, am Heck des Gerätes 1 angeordnet. Dabei soll sich die Befestigungsstelle 11, die die Seitenkante 10a bildet, möglichst rechtwinklig zur Längsachse des Fangsackes 2 erstrecken.

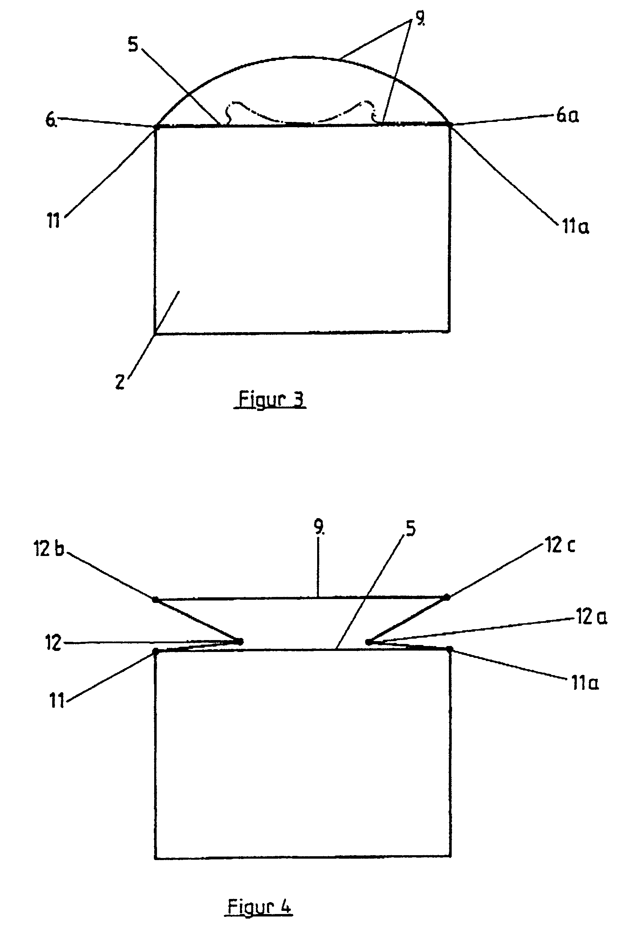

Bei der in Figur 3 dargestellten Ausführungsform ist das flächig ausgebildete Anzeigeelement 9 mit zwei Seitenkanten 6, 6a über Befestigungsstellen 11, 11a mit dem Fangsack 2, insbesondere dessen Deckfläche 5 verbunden. Die gestreckte Länge des streifenförmigen Anzeigeelementes 9 ist größer, als der Abstand zwischen den Befestigungsstellen 11, 11a. Aus Figur 3 ist die Normalposition ersichtlich, d.h. die Stellung während des Füllens des Fangsackes 2. Ist der Fangsack 2 gefüllt, fällt das Anzeigeelement 9 nach unten und legt sich auf die Oberfläche, d.h. die Deckfläche 5 des Fangsackes 2. Diese Position ist in gestrichelter Form dargestellt.

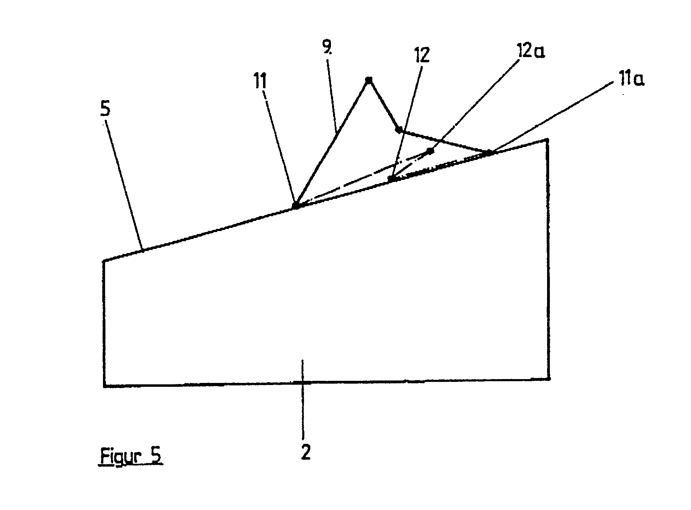

Bei der Ausführungsform nach Figur 4 sind ebenfalls zwei Befestigungsstellen 11, 11a für das Anzeigeelement 9 vorgesehen. Es ist ebenfalls der Deckfläche 5 zugeordnet. Zwischen den beiden Befestigungsstellen 11, 11a sind jedoch weitere Gelenkstellen 12, 12a, 12b und 12c vorgesehen. Da es sich bei dem Anzeigeelement 9 um einen Gewebestreifen oder eine Folie handelt, können die Gelenkstellen 12, 12a, 12b, 12c, und die Befestigungsstellen 11, 11a durch scharfe Knickkanten oder Filmscharnierstellen gebildet werden. Hierdurch wird ein gezieltes Zusammenlegen und Aufrichten erreicht.

Eine ähnliche Ausbildung ist in Figur 5 dargestellt. Es handelt sich jedoch hierbei nicht um eine Rückansicht wie bei Figur 4. Das Anzeigeelement 9 ist nicht quer auf der Deckfläche 5 angeordnet, sondern längs zum Fangsack. Die Befestigungsstellen 11, 11a des Anzeigeelementes sind also auf der Längsachse des Fangsackes 2 versetzt zueinander angeordnet. Es sind zwei weitere Gelenkstellen zu den ebenfalls als Gelenkstellen ausgebildeten Befestigungsstellen 11, 11a zusätzlich im Zwischenbereich vorgesehen und mit 12 und 12a bezeichnet. Die aufgerichtete Stellung, das ist die Stellung, bei der eine Füllung noch stattfindet, ist durchgezogen dargestellt, während die zusammengefaltete Stellung durch eine gestrichelte Linie dargestellt ist.

**Ansprüche**

1. Sammel- oder Fangvorrichtung (2) für ein Garten-, Rasen- oder Landschaftspflegegerät mit einer Füllstandsanzeige, wobei das zu sammelnde oder aufzufangende Gut durch Ausnutzung eines vom Gerät erzeugten Luftstromes durch die Auswurföffnung (3) in die zumindest teilweise luftdurchlässige Sammel- oder Fangeinrichtung (2) überführt wird und als Füllstandsanzeige ein durch die Auftriebskraft des die Sammel- oder Fangvorrichtung (2) durchströmenden Luftstromes aus der Ruhelage abgelenktes Anzeigeelement vorhanden ist, wobei das Anzeigeelement (9) flächig ausgebildet und mindestens mit einer Seitenkante (10 oder 10a) an der luftdurchlässigen Außenfläche (5, 6, 6a, 7) der Sammel- oder Fangvorrichtung (2) befestigt ist und bei der das Anzeigeelement (9) aus einem Gewebe, das eine geringere Luftdurchlässigkeit als die Wandung der Sammel- oder Fangvorrichtung (2) aufweist oder aus einer Kunststoffolie besteht.

2. Vorrichtung nach Anspruch 1, dadurch gekennzeichnet, daß das Anzeigeelement (9) mit zwei gegenüberliegenden Seitenkanten (10 oder 10a) an der Außenfläche (5, 6, 6a, 7) der Sammel- oder Fangvorrichtung (2) befestigt ist und der Abstand der Befestigungsstellen (11, 11a) an der Sammel- oder Fangvorrichtung (2) kleiner ist, als die gestreckte Länge des flächigen Anzeigeelementes (9), gemessen zwischen den zur Befestigung vorgesehenen Seitenkanten (10 oder 10a).

3. Vorrichtung nach Anspruch 2, dadurch gekennzeichnet, daß das Anzeigeelement (9) zwischen den Befestigungsstellen (11, 11a) mit mindestens zwei weiteren Gelenkstellen (12, 12a, 12b, 12c) versehen ist, deren Achsen sich parallel zu den Seitenkanten (10 oder 10a), die zur Befestigung vorgesehen sind, erstrecken.

4. Vorrichtung nach einem oder mehreren der Ansprüche 1 bis 3, dadurch gekennzeichnet, daß die als Gelenkstelle ausgebildeten Befestigungsstellen (11, 11a) und/oder die weiteren Gelenkstellen (12, 12a, 12b, 12c) aus Knickkanten oder Filmscharnierstellen bestehen.

5. Vorrichtung nach Anspruch 1, dadurch gekennzeichnet, daß das Anzeigeelement (9) mit der Sammel- oder Fangvorrichtung (2) durch Siegeln, Kleben, Knöpfen, Klammern oder einen Klettverschluß verbindbar ist.

6. Vorrichtung nach Anspruch 1, dadurch gekennzeichnet, daß das Anzeigeelement (9) einer der Seitenflächen (6, 6a), der Deck- (5) oder Hinterfläche (7) der Sammel- oder Fangvorrichtung (2) zugeordnet ist.

7. Vorrichtung nach den Ansprüchen 1 oder 6, dadurch gekennzeichnet, daß das Anzeigeelement (9) nahe der Auswurfsöffnung (3) des Gerätes (1) angeordnet ist.

8. Vorrichtung nach einem oder mehreren der Ansprüche 1 bis 7, gekennzeichnet durch die Verwendung mit einem Sichelrasenmäher, einem Vertikutierer, Laubsauger oder Laubkehrer mit Auswurfsöffnung (3).

9. Vorrichtung nach einem oder mehreren der Ansprüche 1 bis 8, gekennzeichnet durch die Ausbildung der Sammel- oder Fangvorrichtung als Fangsack (2) aus einem luftdurchlässigen Gewebe.

10. Vorrichtung nach einem oder mehreren der Ansprüche 1 bis 9, gekennzeichnet durch eine Ausbildung der Sammel- oder Fangvorrichtung als gelochter Fangkorb.

## Claims

1. Collecting or catching means (2) for a garden, lawn or landscape maintenance apparatus, having a fill indicator, wherein the material to be collected or caught is transferred through the ejection aperture (3) into the at least partially air-permeable collecting or catching means (2) by making use of the air flow generated by the apparatus, as the fill indicator is provided an indicating element deflected from its position of rest by the lifting force of the air flow passing through the collecting or catching means (2), wherein the indicating element (9) is designed to be planar and is fixed with at least one side edge (10 or 10a) on the air-permeable outer face (5, 6, 6a, 7) of the collecting or catching means (2) and with the indicating element (9) consisting either of a fabric whose air permeability is lower than that of the wall of the collecting or catching means (2) or of a plastic foil.

2. Means according to Claim 1, characterised in that the indicating element (9) is fixed to the outer face (5, 6, 6a, 7) of the collecting or catching means (2) by two opposed side edges (10 or 10a) and that the distance between the fixing points (11, 11a) on the collecting or catching means (2) is smaller than the extended length of the planar indicating element (9) as measured between the lateral edges (10 or 10a) intended for fixing purposes.

3. Means according to Claim 2, characterised in that the indicating element (9), between the fixing points (11, 11a) is provided with at least two further articulation points (12, 12a, 12b, 12c) whose axes extend parallel to the side edges (10 or 10a) intended for fixing purposes.

4. Means according to one or several of Claims 1 to 3, characterised in that the fixing points (11, 11a) designed as articulation points and/or the further articulation points (12, 12a, 12b, 12c) consist of bent edges or film-hinge points.

5. Means according to Claim 1, characterised in that the indicating element (9) may be connected to the collecting or catching means (2) by sealing, gluing, by buttons, clips or Velcro.

6. Means according to Claim 1, characterised in that the indicating element (9) is associated with one of the side faces (6, 6a), the cover face (5) or rear face (7) of the collecting or catching means (2).

7. Means according to Claims 1 or 6, characterised in that the indicating element (9) is arranged near the ejection aperture (3) of the apparatus (1).

8. Means according to one or several of Claims 1 to 7, characterised by being used together with a rotary type lawn mower, a scarifier, dead leaf suction device or dead leaf sweeper with an ejection aperture (3).

9. Means according to one or several of Claims 1 to 8, characterised in that the collecting or catching means are designed in the form of a collecting bag (2) consisting of an air-permeable fabric.

10. Means according to one or several of Claims 1 to 9, characterised in that the collecting or catching means is designed in the form of a collecting basket with holes.

## Revendications

1. Dispositif collecteur ou capteur (2) pour appareil d'entretien de jardin, de gazon ou agricole à indicateur de remplissage, dans lequel les objets à collecter ou à capter sont envoyés dans le dispositif collecteur ou capteur (2) au moins partiellement perméable à l'air par l'ouverture d'éjection (3) au moyen d'un courant d'air produit par l'appareil, et un élément indicateur écarté de la position de repos par la poussée verticale du courant d'air qui traverse le dispositif collecteur ou capteur (2) est présent en tant qu'indicateur de remplissage, l'élément indicateur (9) étant sous forme plane et étant fixé par au moins une arête latérale (10 ou 10a) à la surface externe perméable à l'air (5, 6, 6a, 7) du dispositif collecteur ou capteur (2) et dans lequel l'élément indicateur (9) consiste en un tissu qui présente une perméabilité à l'air plus faible que la paroi du dispositif collecteur ou capteur (2) ou en une feuille de matière plastique.

2. Dispositif selon la revendication 1, caractérisé en ce que l'élément indicateur (9) est fixé par deux arêtes latérales (10 ou 10a) opposées à la surface externe (5, 6, 6a, 7) du dispositif collecteur ou capteur (2) et la distance des sites de fixation (11, 11a) sur le dispositif collecteur ou capteur (2) est plus petite que la longueur étendue de l'élément indicateur plan (9) mesurée entre les arêtes latérales (10 ou 10a) prévues pour la fixation.

3. Dispositif selon la revendication 2, caractérisé en ce que l'élément indicateur (9) est muni entre les sites de fixation (11, 11a) d'au moins deux autres sites d'articulation (12, 12a, 12b, 12c) dont les axes s'étendent parallèlement aux arêtes latérales (10 ou 10a) qui sont prévues pour la fixation.

4. Dispositif selon une ou plusieurs des revendications 1 à 3, caractérisé en ce que les sites de fixation sous forme de sites d'articulation (11, 11a) et/ou les autres sites d'articulation (12, 12a, 12b, 12c) consistent en des arêtes de pliage ou en des sites formant charnière à film.

5. Dispositif selon la revendication 1, caractérisé en ce que l'élément indicateur (9) peut être fixé au dispositif collecteur ou capteur (2) par scellement, collage, boutonnage, agrafage ou par une fermeture auto-accrochante.

6. Dispositif selon la revendication 1, caractérisé en ce que l'élément indicateur (9) est associé à l'une des surfaces latérales (6, 6a), à la surface supérieure (5) ou à la surface postérieure (7) du dispositif collecteur ou capteur (2).

7. Dispositif selon les revendications 1 ou 6, caractérisé en ce que l'élément indicateur (9) est disposé à proximité de l'ouverture d'éjection (3) de l'appareil (1).

8. Dispositif selon une ou plusieurs des revendications 1 à 7, caractérisé par l'utilisation avec une tondeuse à gazon rotative, un verticuteur, un aspirateur de feuilles ou une balayeuse de feuilles avec une sortie d'éjection (3).

9. Dispositif selon une ou plusieurs des revendications 1 à 8, caractérisé par le fait que le dispositif collecteur ou capteur est sous forme d'un sac capteur (2) en tissu perméable à l'air.

10. Dispositif selon une ou plusieurs des revendications 1 à 9, caractérisé en ce que le dispositif collecteur ou capteur est sous forme d'un panier capteur perforé.

Figur 1

Figur 2

6

Figur 3

Figur 4

Figur 5